# EUROPÄISCHE PATENTSCHRIFT

(11) **EP 2 432 415 B1**
(45) Veröffentlichungstag und Bekanntmachung des Hinweises auf die Patenterteilung: **11.09.2013**
(21) Anmeldenummer: 10731457.7
(22) Anmeldetag: 11.06.2010
(51) Int. Cl.: A61C 7/28

(54) **BAUREIHE VON BRACKETS FÜR DIE ORTHODONTIE**
SET OF BRACKETS FOR ORTHODONTICS
GAMME DE FABRICATION DE BOÎTIERS ORTHODONTIQUES

(30) Priorität: 17.06.2009 DE 102009029834
(43) Veröffentlichungstag der Anmeldung: 28.03.2012
(60) Teilanmeldung: 11179106.7
(73) Patentinhaber: Bernhard Förster GmbH, 75172 Pforzheim (DE)
(72) Erfinder: FÖRSTER, Rolf, 75173 Pforzheim (DE)
(74) Vertreter: Twelmeier Mommer & Partner
(86) Internationale Anmeldenummer: PCT/EP2010/003519
(87) Internationale Veröffentlichungsnummer: WO 2010/145782

(56) Entgegenhaltungen:
- EP-A1- 1 234 549
- DE-A1-102006 027 130
- US-A- 5 248 257
- US-A1- 2007 269 763
- US-A1- 2009 061 376

## Beschreibung

Die Erfindung betrifft eine Baureihe von Brackets für die Orthodontie.

Aus der DE 10 2006 027 130 A1 ist eine Baureihe bekannt, welche ein Bracket für die Orthodontie mit einer Basis,
mit einem auf der Basis angeordneten Sockel,
mit einer von dem Sockel ausgehenden okklusalen Wand mit wenigstens einem okklusalen Ligaturenflügel,
mit einer von dem Sockel ausgehenden gingivalen Wand mit wenigstens einem gingivalen Ligaturenflügel,
mit einem Slot, welcher die okklusale Wand und die gingivale Wand voneinander trennt und sich durchgehend in Richtung von mesial nach distal erstreckt und eine Basisfläche hat, auf welcher bei einer orthodontischen Behandlung ein Bogendraht (arch wire) liegt,
und mit einem Durchgang, welcher sich in Richtung gingival-okklusal durch den Sockel hindurch erstreckt und durch eine lingual gelegene Oberfläche und durch eine labial gelegene Oberfläche begrenzt ist,
sowie zwei verschiedene, gegeneinander austauschbare federnde Klammern mit einem labialen Schenkel und mit einem lingualen Schenkel enthält, welche durch einen okklusal oder gingival angeordneten Abschnitt miteinander verbunden sind.

Der linguale Schenkel ist in den Durchgang einführbar und darin nur in Richtung gingival-okklusal zwischen einer Schließstellung, in welcher sich der labiale Schenkel bis in einen Ausschnitt in der gingivalen Wand bzw. in der okklusalen Wand erstreckt, und einer Offenstellung der Klammer verschiebbar.

Der Ausschnitt in der gingivalen bzw, in der okklusalen Wand hat mindestens in labialer Richtung einen Anschlag für den labialen Schenkel der Klammer. In der Offenstellung liegt die Spitze des labialen Schenkels der Klammer je nach Orientierung der Klammer im Bracket entweder über der okklusalen Wand oder über der gingivalen Wand des Brackets, so dass ein orthodontischer Bogendraht in Richtung labiallingual in den Slot eingeführt werden kann, in welchem er durch die Klammer gesichert ist, wenn diese sich in ihrer Schließstellung befindet. Die Klammer macht aus dem Bracket ein selbstligierendes Bracket.

Die aus der DE 10 2006 027 130 A1 bekannte Baureihe enthält für ein und dasselbe Bracket unterschiedliche Klammern. Durch Austauschen einer Klammer gegen eine davon verschiedene Klammer wir die Möglichkeit gegeben, ein aktives selbstligierendes Bracket in ein passives selbstligierendes Bracket umzuwandeln. Unter einem passiven Bracket wird ein Bracket verstanden, in welchem die Bogendrähte, welche für eine orthodontische Behandlung in den Slot der Brackets eingeführt werden, von dem labialen Schenkel der Klammer nicht mit Druck beaufschlagt werden können, solange der Bogendraht auf der Basisfläche des Slots liegt. Unter einem aktiven Bracket wird ein Bracket verstanden, in welchem wenigstens die Bogendrähte mit dem größten in der orthodontischen Praxis vorkommenden Querschnitt auch dann vom labialen Schenkel der federnden Klammer mit Druck beaufschlagt werden, wenn sie auf der Basisfläche des Slots liegen. Das bedeutet, dass in diesem Fall die Klammer nur unter elastischem Aufbiegen in ihre Schließstellung überführt werden kann.

Passive Brackets und aktive Brackets haben beide ihre Existenzberechtigung in der orthodontischen Behandlung von Fehlstellungen der Zähne. Für manche Fehistellungen oder Behandlungsphasen zur Korrektur von Fehlstellungen werden aktive Brackets bevorzugt, für andere passive Brackets. Nähere Ausführungen dazu finden sich in der DE 10 2006 027 130 A1.

Die Federklammern für selbstligierende Brackets sind angesichts der Tatsache, dass die Brackets und die Federklammern sehr kleine Abmessungen haben, nur schwierig mit reproduzierbaren Federeigenschaften und Abmessungen herzustellen. Das gilt auch für selbstligierende Brackets der Art, wie sie in der DE 10 2006 027 130 A1 offenbart sind und bei denen es darauf ankommt, für passive Brackets Federklammern mit einer etwas größeren Öffnungsweite als für aktive Brackets herzustellen. Hinzu kommt, dass bei den aus der DE 10 2006 027 130 A1 bekannten selbstligierenden Brackets die federnden Klammern in der passiven Version des Brackets den Slot nicht so zu zuverlässig zuhalten wie in der aktiven Version.

Eine weitere Baureihe von selbstligierenden Brackets für die Orthodontie mit einer federnden Klammer ist aus der EP 1 234 549 A1 bekannt.

Der vorliegenden Erfindung liegt die Aufgabe zugrunde, nach Wegen zu suchen, die genannten Nachteile zu verringern, ohne den Aufwand für die Fertigung der selbstligierenden Brackets zu erhöhen.

Diese Aufgabe wird durch eine Baureihe mit den in den Patentansprüchen 1 und 2 angegebenen Merkmalen gelöst. Vorteilhafte Weiterbildungen der Erfindung sind Gegenstand der Unteransprüche. Der Unterschied zwischen den Patentansprüchen 1 und 2 besteht lediglich darin, dass die federnde Klammer im Falle des Anspruchs 1 mit ihrem labialen Schenkel von der okklusalen Wand des Brackets herkommend bis in einen Ausschnitt in der gingivalen Wand des Brackets ragt. Im Falle des Patentanspruchs 2 ist es umgekehrt: In diesem Fall ragt der labiale Schenkel der federnden Klammer von der gingivalen Wand des Brackets herkommend bis in einen Ausschnitt der okklusalen Wand des Brackets. Die im Anspruch 1 angegebene Variante wird bevorzugt, weil die Klammer den beim Kauen auftretenden Beanspruchungen besser Stand halten kann und zuverlässiger in der Schließstellung gehalten wird als bei der Ausführungsform gemäß Anspruch 2.

Erfindungsgemäß enthält die Baureihe Brackets, die sich nur in der Tiefe des Slots unterscheiden. Insbesondere enthält die Baureihe Paare von Brackets mit untereinander gleichen Klammern, wobei sich die beiden Brackets eines Paares nur in der Tiefe des Slots unterscheiden. Für das Befestigen an unterschiedlichen Zähnen können unterschiedliche Brackets verwendet werden, z. B. Brackets mit unterschiedlichen Anbauten oder mit unterschiedlicher Angulation und zur Übertragung von unterschiedlichem Torque. Von jeder dieser unterschiedlichen Ausführungsformen kann es ein aktives Bracket und ein passives Bracket geben.

Die Erfindung hat wesentliche Vorteile:
- Die federnde Klammer kann für alle Brackets einer Baureihe gleich sein und ist vorzugsweise für alle Brackets einer Baureihe gleich. Das ist eine große Erleichterung für die Herstellung der empfindlichen federnden Klammern.
- Um trotz der Verwendung von untereinander gleichen federnden Klammern aktive und passive Brackets herstellen zu können, schlägt die Erfindung eine verblüffend einfache Maßnahme vor, die darin besteht, lediglich eine einzige Änderung im Bracket vorzunehmen, nämlich die Tiefe des Slots im Bracket so zu verändern, dass man bei einer ersten Tiefe des Slots zu einem aktiven Bracket der Baureihe und bei einer zweiten Tiefe zu einem passiven Bracket der Baureihe gelangt. Die größere Tiefe führt zu einem passiven Bracket, die kleinere Tiefe zu einem aktiven Bracket. Im Übrigen können die beiden Brackets übereinstimmen und stimmen vorzugsweise auch überein.
- Die Erfindung kann z. B. dadurch verwirklicht werden, dass man zunächst Brackets formt, deren Slot eine kleine Tiefe hat, die in Verbindung mit der vorgegebenen federnden Klammer zu einem aktiven Bracket führt. Durch Abfräsen oder Abschleifen eines Teils des Materials von der Basis des Slots, kann man diesen vertiefen und dadurch zu einem passiven Bracket gelangen.
- Besonders kostengünstig lässt sich die Erfindung jedoch verwirklichen, wenn die Brackets durch ein Spritzgießverfahren hergestellt werden. Das ist nicht nur bei Brackets aus Kunststoff möglich, sondern auch bei keramischen Brackets, dort durch das CIM-Verfahren (ceramic injection molding), und auch bei metallischen Brackets, dort durch das MIM-Verfahren (metal injection molding). Sowohl beim CIM-Verfahren als auch beim MIM-Verfahren wird eine Pulver-Aufschlämmung in eine Spritzgießform gespritzt, verdichtet und anschließend gesintert. In der Spritzgießform erfolgt die Formgebung teilweise mit Hilfe von Schiebern. Das gilt insbesondere für die Formung des Slots. Um statt eines aktiven Brackets ein passives Bracket zu spritzen, muss lediglich der für die Bildung des Slots erforderliche Schieber gegen einen etwas längeren Schieber ausgetauscht werden. Alle übrigen Bestandteile der Form können unverändert bleiben. Erfindungsgemäße Brackets beider Ausführungsformen der Baureihe können also sehr rationell und preiswert hergestellt werden.

Die größten Querschnitte, die für orthodontische Bogendrähte derzeit praktisch vorkommen, haben entweder Abmessungen von 0,56 mm x 0,64 mm (0,022 inch x 0,025 inch) oder Abmessungen von 0,46 mm x 0,64 mm (0,018 inch x 0,025 inch), wobei 0.64 mm (0,025 inch) die Höhe ist, die der Bogendraht über der Basisfläche des Slots im Bracket einnehmen kann. Es ist deshalb bevorzugt, dass bei den Brackets der erfindungsgemäßen Baureihen die kleinste lichte Weite des Slots entweder 0,56 mm (0,022 inch) oder 0,46 mm (0,018 inch) beträgt. Stellenweise kann die Weite des Slots größer sein, z. B. an den beiden Enden des Slots. Um jedoch einen Bogendraht mit einer Breite von 0,56 mm (0,022 inch) bzw. 0,46 mm (0,018 inch) einführen zu können, soll der Slot überall mindestens diese lichte Weite von 0,56mm (0,022 inch) bzw. von 0,46 mm (0,018 inch) haben. Die lichte Weite des Slots soll aber nicht überall wesentlich größer sein als die 0,56mm (0.022 inch) bzw. die 0,46 mm (0,018 inch) um mit einem Bogendraht mit rechteckigem oder quadratischem Querschnitt auch Drehmomente (torque) auf die Zähne übertragen zu können.

Für ein erstes Bracket der Baureihe ist der Abstand des Anschlags für den labialen Schenkel der Klammer von der Basisfläche des Slots vorzugsweise so groß gewählt, dass ein orthodontischer Bogendraht mit dem größten in der orthodontischen Praxis vorkommenden Querschnitt von der sich in ihrer Schließstellung befindlichen Klammer nicht mit Druck beaufschlagt wird, wenn der Bogendraht auf der Basisfläche des Slots liegt. Wenn in das erste Bracket anstelle eines Bogendrahtes mit dem größten in der orthodontischen Praxis vorkommenden Querschnitt ein Bogendraht mit geringerer Höhe eingesetzt wird, kann der niedrigere Bogendraht von der federnden Klammer erst recht nicht mehr mit Druck beaufschlagt werden, solange er auf der Basisfläche des Slots liegt. Für ein zweites Bracket der Baureihe ist der Abstand des Anschlags für den labialen Schenkel der Klammer von der Basisfläche des Slots kleiner gewählt als im ersten Bracket, so dass wenigstens der Bogendraht mit dem größten in der orthodontischen Praxis vorkommenden Querschnitt in jedem Fall vom labialen Schenkel der Klammer mit Druck beaufschlagt wird, so dass sich das Bracket aktiv verhält, während sich das erste Bracket in jedem Fall passiv verhält.

Der Abstand des Anschlags für den labialen Schenkel der Klammer von der Basisfläche des Slots beträgt für ein erstes Bracket, welches als passives Bracket verwendet werden soll, zweckmäßigerweise 0,64 mm (0,025 inch). Der Abstand könnte auch größer gewählt werden, doch ist das nicht zweckmäßig, weil es unnötigerweise die Höhe des Brackets erhöhen würde. Für ein zweites Bracket der Baureihe beträgt der Abstand des lingualen Anschlags für den labialen Schenkel der Klammer von der Basisfläche des Slots vorzugsweise 0,3 mm bis 0,5 mm, insbesondere 0,38 bis 0,42 mm. Das ist für die orthodontische Praxis ein sehr guter Kompromiss für die Tiefe des Slots in einem aktiven Bracket, gemessen vom lingualen Anschlag für den labialen Schenkel der Klammer bis zur Basisfläche des Slots.

Brackets der erfindungsgemäßen Baureihe haben wenigstens einen lingualen Anschlag für den labialen Schenkel der Klammer, um die Eintauchtiefe des labialen Schenkels der Klammer in den Slot des Brackets wirksam zu begrenzen. Vorzugsweise haben die Brackets der erfindungsgemäßen Baureihe auch einen in labialer Richtung wirksamen Anschlag für den labialen Schenkel der Klammer, um zu verhindern, dass der Bogendraht den labialen Schenkel der Klammer im Verlauf einer orthodontischen Behandlung soweit hochbiegt, dass der Bogendraht den Slot verlassen kann. Ein solcher in labialer Richtung wirksamer Anschlag kann dadurch gebildet werden, dass der Ausschnitt in der gingivalen Wand oder - bei umgekehrter Orientierung der Klammer - in der okklusalen Wand des Brackets ein Fenster oder eine Nut ist, welche parallel zur Basisfläche des Slots verlaufende Ränder haben.

Der weiteren Erläuterung der Erfindung dienen die beigefügten Zeichnungen, welche ein aktives Bracket und ein passives Bracket darstellen. In den Brackets sind gleiche oder einander entsprechende Teile mit übereinstimmenden Bezugszahlen bezeichnet.
- Figur 1: zeigt ein aktives Bracket in einer Seitenansicht mit Blickrichtung in Längsrichtung des Slots im Bracket,
- Figur 2: zeigt ein entsprechendes passives Bracket in einer Seitenansicht entsprechend der Figur 1,
- Figur 3: zeigt das aktive Bracket aus Figur 1 in einem rechtwinklig durch den Slot gelegten, mittigen Querschnitt,
- Figur 4: zeigt das passive Bracket aus Figur 2 in einem Schnitt entsprechend der Figur 3,
- Figur 5: zeigt vergrößert das Detail X aus Figur 4,
- Figur 6: zeigt das aktive Bracket aus Figur 1 mit seiner federnden Klammer in Offenstellung in Draufsicht,
- Figur 7: zeigt das passive Bracket aus Figur 2 in einer Darstellung entsprechend der Figur 6,
- Figur 8: zeigt das aktive Bracket aus Figur 1 in einer Draufsicht mit der federnder Klammer in ihrer Schließstellung,
- Figur 9: zeigt das passive Bracket aus Figur 2 in einer Darstellung entsprechend der Figur 8,
- Fig. 10: zeigt das aktive Bracket aus Figur 1 in einer Schrägansicht und
- Fig. 11: zeigt das passive Bracket aus Figur 2 in einer Schrägansicht.

In den Darstellungen des passiven Brackets sind nur die Teile mit Bezugszeichen bezeichnet, in welchen sich das passive Bracket vom aktiven Bracket unterscheidet.

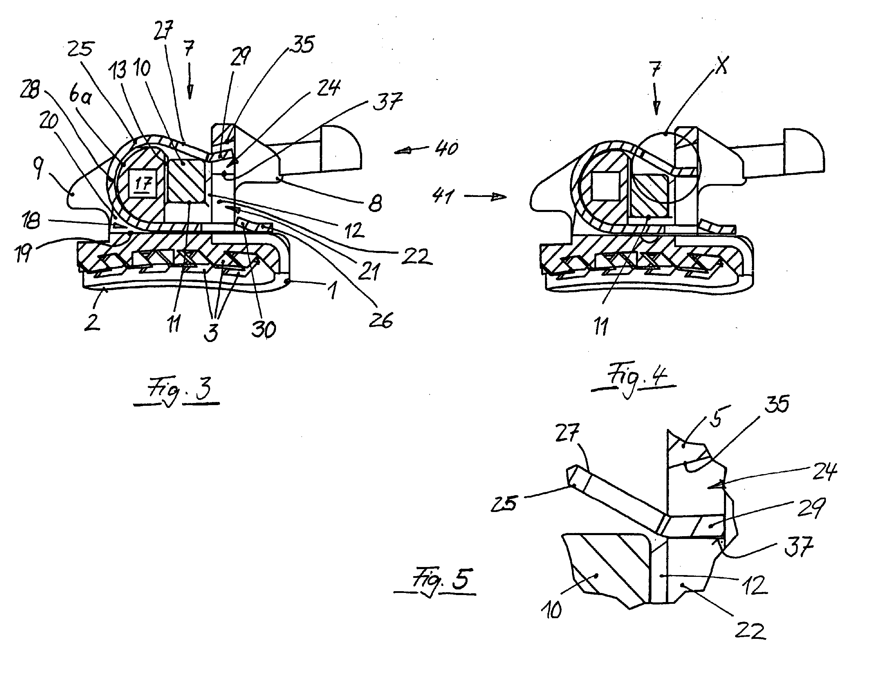

Beide Brackets, das aktive Bracket 40 und das passive Bracket 41, haben eine gewölbte Basis 1, deren Wölbung der Vorderseite eines Zahnes angenähert ist. Die Basis 1 hat an ihrer Unterseite 2, welche die linguale Seite des Brackets 40, 41 bildet, in Reihe angeordnete Vorsprünge 3, welche hinterschnitten ausgebildet sind. Die Vorsprünge 3 sind in einem Schnitt, wie er in den Figuren 3 und 4 dargestellt ist, rautenförmig, in einem zur Unterseite 2 parallelen Schnitt hingegen rechteckig ausgebildet. Auf die Unterseite 2 kann ein Klebstoff aufgetragen werden, um das Bracket 40, 41 auf die Vorderseite eines Zahnes zu kleben. Durch die Verzahnung der Vorsprünge 3 mit dem Klebstoff wird eine gute Haftfestigkeit erzielt. In einer jeden Reihe sind die Vorsprünge 3 und mit ihnen die Hinterschnitte übereinstimmend orientiert. Von Reihe zu Reihe sind sie jedoch abwechselnd mal in die eine Richtung und mal in die andere Richtung orientiert. Dadurch wird bei einem auf das Bracket 40, 41 wirkenden Schub in Richtung von gingival nach okklusal dieselbe Haftfestigkeit erzielt wie bei einem Schub von okklusal nach gingival.

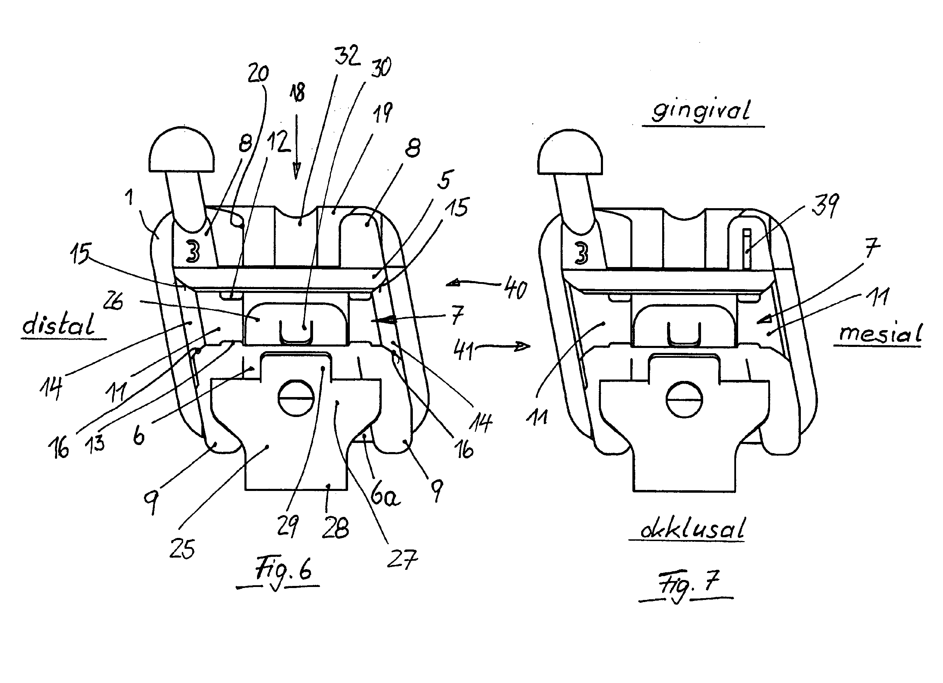

In Figur 7 ist die für das Bracket vorgesehene Orientierung auf einem Zahn hinsichtlich der Richtungen gingival-okklusal und distal-mesial angegeben.

Die Basis 1 geht in einen Sockel 4 über, auf welchem eine gingivale Wand 5 und eine okklusale Wand 6 stehen. Die beiden Wände 5 und 6 verlaufen parallel zueinander und sind durch eine Nut 7 getrennt, welche auch als Slot bezeichnet wird, durchgehend von distal nach mesial verläuft und nach labial offen ist.

An der gingivalen Wand 5 sind zwei in Richtung gingival ragende Ligaturenflügel 8 vorgesehen. An der okklusalen Wand 6 sind zwei in Richtung okklusal ragende Ligaturenflügel 9 vorgesehen. An ihnen können in einer dem Fachmann bekannten Weise Ligaturendrähte angebracht werden.

Der Slot 7 dient zur Aufnahme eines Bogendrahts 10, welcher insbesondere einen rechteckigen Querschnitt hat. Durch Vorspannen des Bogendrahts 10 kann auf die Basisfläche 11 des Slots 7 Druck und auf die Wände 5 und 6 des Brackets ein Drehmoment ausgeübt werden. Zu diesem Zweck ist der lichte Querschnitt des Slots 7 im wesentlichen rechteckig ausgebildet. Er ist im vorliegenden Fall durch flache, niedrige Rippen 12 auf der gingivalen Wand 5 und durch flache, niedrige Rippen 13 auf der okklusalen Wand 6 geringfügig verengt. Die Rippen 12 und 13 dienen der Reibungsminderung des Bogendrahts 10 im Slot 7. Die Basisfläche 11 des Slots 7 ist, was nachfolgend noch näher beschrieben wird, nicht über die gesamte Länge des Slots 7 auf demselben Niveau ausgebildet, sondern unterbrochen. Das mindert ebenfalls die Reibung des Bogendrahts 10 im Slot 7. An den Enden des Slots 7 sind gerundete Schrägflächen 14 an der Basisfläche des Slots 7, gerundete Schrägflächen 15 an der gingivalen Wand 5 und gerundete Schrägflächen 16 an der okklusalen Wand 6 vorgesehen, welche den Eingang des Slots 7 erweitern und ebenfalls der Reibungsminderung für den im Slot 7 liegenden Bogendraht 10 dienen; das ist besonders bei großen Fehlstellungen der Zähne von Vorteil, welche einen besonders unregelmäßigen Verlauf des Bogendrahts 10 erfordern.

In der okklusalen Wand 6 ist ein von distal nach mesial durchgehender Kanal 17 vorgesehen, welcher ein Hilfselement für die Zahnstellungskorrektur aufnehmen kann, zum Beispiel eine Feder, ein Häkchen oder einen Hilfsdraht.

Unterhalb der Basisfläche 11 des Slots 7 verläuft parallel zu dieser ein schlitzartiger Durchgang 18, welcher auf der lingualen Seite durch eine ebene, zur Basisfläche 11 des Slots 7 parallele Oberfläche 19 begrenzt ist. Diese Oberfläche 19 erstreckt sich ausgehend von der okklusalen Wand 6 quer durch das Bracket 40, 41 und verläuft zunächst im Sockel 4 und schließlich im gingivalen Bereich des Brackets in dessen Basis 1. In der Nachbarschaft der Ligaturenflügel 8 und 9 ist der Durchgang 18 durch Seitenwände 20 begrenzt, welche parallel zueinander und im rechten Winkel zur lingualen Oberfläche 19 verlaufen. Oberhalb des Durchganges 18 hat die okklusale Wand 6 auf ihrer dem Slot 7 abgewandten Seite eine zylindermantelförmige Oberfläche 6a. Auf diese Weise ist auf der okklusalen Seite des Brackets 40, 41 ein trichterförmiger Einlauf in den Durchgang 18 gegeben. Zwischen den Seitenwänden 20 ist der Grund des Slots 7 bis unter die Basisfläche 11 abgesenkt, nämlich bis auf die linguale Oberfläche 19 des Durchganges 18.

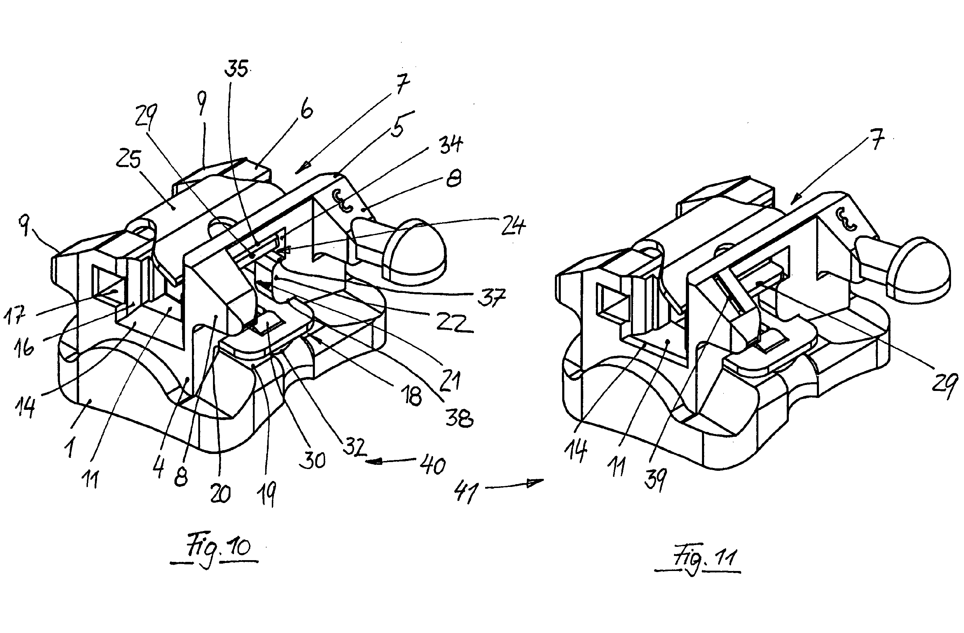

In der gingivalen Wand 5 ist ein Ausschnitt 21 vorgesehen, welcher umrandet ist durch die linguale Oberfläche 19, durch die Seitenwände 20, durch an die Seitenwände 20 anschließende, gegeneinander gerichtete Vorsprünge 22, zwischen welchen die gingivale Wand 5 eine Unterbrechung hat, siehe die Figuren 10 und 11, durch zwei zu den Seitenwänden 20 parallele Ränder 34 und durch einen labial gelegenen Rand 35. Die lingualen Ränder 38 der Vorsprünge 22 dienen der Führung des lingualen Schenkels 26 der Klammer 25. Die Ränder 34 und 35 sowie die Vorsprünge 22 definieren als Bestandteile des Ausschnitts 21 ein im wesentlichen rechteckiges Fenster 24, dessen Länge in Richtung distal-mesial größer ist als der Abstand der Vorsprünge 22 voneinander, aber kleiner ist als der Abstand der gingivalen Ligaturenflügel 8, kleiner auch als der Abstand der Rippen 12 und 13, welcher im vorliegenden Fall mit dem Abstand der Seitenwände 20 übereinstimmt. Die an der gingivalen Wand 5 vorgesehenen Rippen 12 enden in der Höhe des lingualen Randes des Fensters 24, der zugleich der labiale Rand der Vorsprünge 22 ist.

Die Brackets 40, 41 werden durch eine Klammer 25 aus einem Federwerkstoff zu selbstligierenden Brackets ergänzt. Die Klammer 25 hat einen geradlinig verlaufenden lingualen Schenkel 26 und einen demgegenüber kürzeren labialen Schenkel 27, welcher annähernd geradlinig verläuft. Verbunden sind die beiden Schenkel 26 und 27 durch einen annähernd kreisbogenförmig verlaufenden, okklusal gelegenen Abschnitt 28. Dieser ist genauso breit wie der linguale Schenkel 26, welcher mit wenig Spiel in den Durchgang 18 passt. Der labiale Schenkel 27 verbreitert sich annähernd auf die Länge des Slots 7. Er verläuft nicht parallel, sondern in einem spitzen Winkel zum lingualen Schenkel 26, dem er sich, vom okklusalen Abschnitt 28 herkommend, annähert. Der labiale Schenkel 27 hat an seinem gingivalen Ende einen sich nach gingival erstreckenden Fortsatz 29, der in Richtung nach labial abgewinkelt ist. Der Fortsatz 29 ist schmäler als der labiale Schenkel 27 und schmäler als der linguale Schenkel 26; er passt - bezogen auf die Längsrichtung des Slots 7 - mit wenig Spiel in das Fenster 24, welches Bestandteil des Ausschnitts 21 in der gingivalen Wand 5 ist.

In der Nähe des gingivalen Endes des lingualen Schenkels 26 ist aus diesem eine Zunge 30 ausgeschnitten und in Richtung zum okklusalen Abschnitt 28 unter einem spitzen Winkel zum lingualen Schenkel 26 hochgestellt.

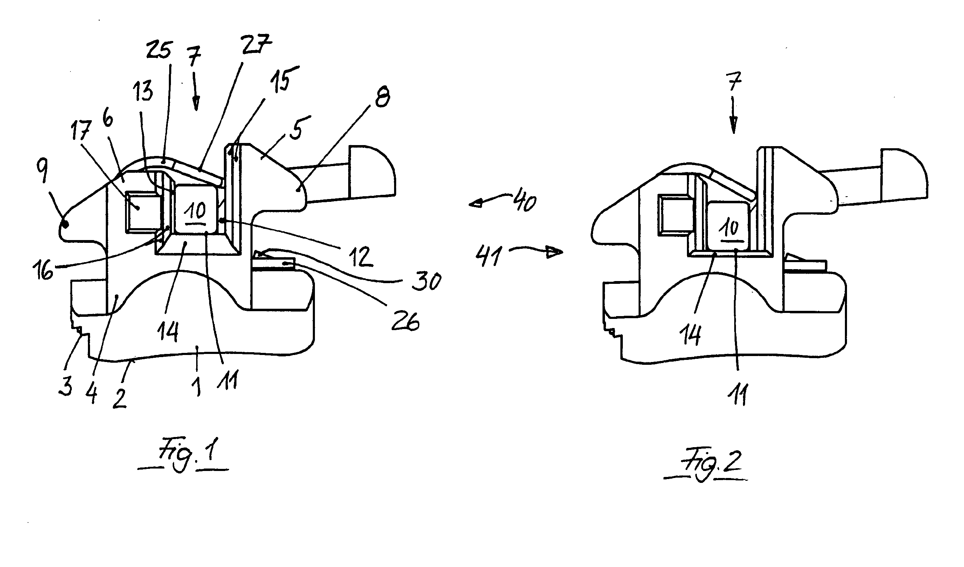

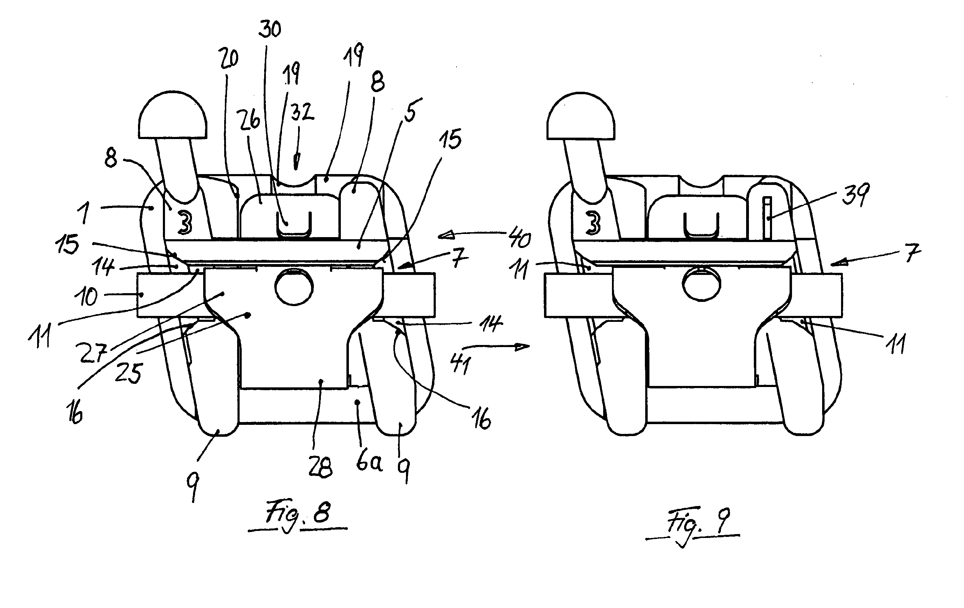

Die Klammer 25 wird mit dem Bracket 40, 41 verbunden, indem der linguale Schenkel 26 aus okklusaler Richtung kommend in den Durchgang 18 eingeführt wird. Dabei wird durch den sich verengenden Einlauf des Durchganges 18 die Zunge 30 fortschreitend in den Ausschnitt des lingualen Schenkels 26 gedrückt, aus welchem die Zunge 30 ausgeschnitten ist. Sobald die Zunge 30 die okklusale Wand 6 passiert hat, federt sie zurück und ist nun gegen die okklusale Wand 6 gerichtet, so dass die Klammer 25 nicht mehr verloren gehen kann. Während des Vorschiebens der Klammer 25 bis in diese Stellung trifft der Fortsatz 29 auf die zylindermantelförmige Oberfläche 6a der okklusalen Wand 6 und gleitet auf dieser bis zu deren labialer Oberseite, wobei die Klammer 25 gegen ihre elastische Rückstellkraft gespreizt wird. Bei weiterem Vorschieben der Klammer 25 gleitet der labiale Schenkel 27 der Klammer 25 von der labialen Oberseite der okklusalen Wand 6 herunter und federt in den Slot 7 ein, wo er sich beim aktiven Bracket (Figuren 1, 3, 6, 8, 10) mit Federkraft an einen Bogendraht 10 anlegen kann, wenn dieser eine solche Höhe hat, dass er bis über die lingualen Ränder 37 des Fensters 24 hinaus ragt, welche einen lingualen Anschlag für den labialen Schenkel 27 der Klammer 25 bilden. Durch das Zurückfedern der Klammer 25 wird diese weiter vorgetrieben, indem sie sich von der okklusalen Wand 6 abstößt, bis sie mit ihrem Fortsatz 29 in das Fenster 24 der gingivalen Wand 5 eingreift. Dadurch sichert die Klammer 25 den Bogendraht 10 in dem Slot 7, denn der Bogendraht 10 kann den labialen Schenkel 27 der Klammer 25 allenfalls soweit anheben, bis dessen Fortsatz 29 am labialen Rand 35 des Fensters 24 anschlägt. Die lingualen Ränder 37 des Fensters 24 sind zugleich die labialen Ränder der Vorsprünge 22; sie bestimmen den kleinsten Abstand, den der labiale Schenkel 27 der Klammer 25 von der Basisfläche 11 des Slots 7 einnehmen kann.

Beim passiven Bracket 41 (Figuren 2, 4, 5, 7, 9, 11) ist die Basisfläche 11 verglichen mit dem aktiven Bracket 40 tiefer gelegt, d. h. sie hat einen größeren Abstand von dem lingualen Anschlag 37 für den labialen Schenkel 27 der Klammer 25 als beim aktiven Bracket 40. Bogendrähte, welche im Slot 7 auf der Basisfläche 11 liegen stehen beim passiven Bracket 41 nicht unter der Klemmwirkung der Klammer 25. Dadurch kann die Zahnstellungskorrektur beschleunigt werden. Das passive Bracket 41 trägt zur leichteren Unterscheidung vom aktiven Bracket 40 eine Markierung 39.

Zur Verminderung der Reibung zwischen dem Bogendraht 10 und der Klammer 25 beim aktiven Bracket 40 sind der distale und der mesiale Rand des labialen Schenkels 27 der Klammer 25 vorzugsweise gerundet oder mit einer Schrägfläche versehen.

Um die Klammer 25 aus ihrer Schließstellung (Figuren 1 bis 5 und 8 bis 11) in ihre Offenstellung (Figuren 6 und 7) zu überführen, nimmt man ein Werkzeug zur Hand, zum Beispiel einen Skaler, und setzt es an den gingivalen Rand des lingualen Schenkels 26 der Klammer 25 an. Diese Stelle kann man ertasten, ohne sie sehen zu müssen, weil sich die den Durchgang 18 auf dessen lingualer Seite begrenzende Oberfläche 19 soweit in gingivaler Richtung erstreckt, dass sie über das gingivale Ende des lingualen Schenkels 26 der Klammer 25 vorsteht. Außerdem befindet sich in der lingualen Oberfläche 19, von deren gingivalem Ende ausgehend, eine Rille 32, welche sich bis unter den lingualen Schenkel 26 der Klammer 25 erstreckt. Die Rille 32 dient als Positionierhilfe für das Werkzeug, mit welchem die Rille 32 ertastet werden kann. Hat man die Rille 32 ertastet, schiebt man mit der Spitze des Werkzeugs die Klammer 25 in Richtung von gingival nach okklusal. Dabei wird die Spitze des Werkzeugs weiterhin durch die Rille 32 in der richtigen Richtung geführt. In der Offenstellung der Klammer 25 hat der labiale Schenkel 27 der Klammer 25 eine Ruhelage auf der okklusalen Wand 6, in welcher er den Zugang zum Slot 7 aus labialer Richtung freigibt.

Die Klammer 25 kann nur soweit in Richtung nach okklusal geschoben werden, bis die Zunge 30 an der okklusalen Wand 6 anschlägt. Es ist daher unmöglich, dass die Klammer 25 beim Überführen von der Schließstellung (Figuren 1 bis 5 und 8 bis 11) in die Offenstellung (Figuren 6 und 7) verloren geht. Will man die Klammer 25 vollständig vom Bracket 40, 41 trennen, muss man die Zunge 30 mit einem Werkzeug in die Ausnehmung im lingualen Schenkel 26 der Klammer 25 zurückdrücken, aus welcher sie ausgeschnitten ist, und während man die Zunge 30 niedergedrückt hält, muss man die Klammer 25 weiter in Richtung nach okklusal schieben oder ziehen.

Ein Vergleich der Darstellungen des aktiven Brackets 40 in den Figuren 1, 3, 6, 8 und 10 mit den Darstellungen des passiven Brackets 41 in den Figuren 2, 4, 5, 7, 9 und 11 zeigt anschaulich, dass der wesentliche Unterschied zwischen den beiden Brackets darin besteht, dass der Abstand zwischen dem lingualen Anschlag 37 und der Basisfläche 11 beim passiven Bracket 41 größer ist als beim aktiven Bracket 40, und zwar so groß, dass selbst der Bogendraht 10 mit dem größten in der orthodontischen Praxis vorkommenden Querschnitt von der Klammer 25 nicht mit Druck beaufschlagt wird - siehe Figur 5 -, wenn der Bogendraht 10 auf der Basisfläche 11 des Slots 7 liegt.

Die Vergrößerung des Abstandes zwischen dem lingualen Anschlag 37 und der Basisfläche 11 beim passiven Bracket 41 geht mit einer Verlängerung der Schrägflächen 15 und 16 sowie mit einer Verkleinerung der Schrägflächen 14 an den Enden des Slots 7 einher. Weitere Änderungen (abgesehen von der Markierung 39) weist das passive Bracket 41 gegenüber dem aktiven Bracket 40 nicht auf.

### Bezugszahlen

- 1.: Basis
- 2.: Unterseite von 1
- 3.: Vorsprünge
- 4.: Sockel
- 5.: gingivale Wand
- 6.: okklusale Wand
- 6a.: zylindermantelförmige Oberfläche
- 7.: Slot
- 8.: gingivale Ligaturenflügel
- 9.: okklusale Ligaturenflügel
- 10.: Bogendraht
- 11.: Basisfläche von 7
- 12.: Rippen an 5
- 13.: Rippen an 6
- 14.: Schrägflächen an 11
- 15.: Schrägflächen an 5
- 16.: Schrägflächen an 6
- 17.: Kanal
- 18.: Durchgang
- 19.: linguale Oberfläche
- 20.: Seitenwände
- 21.: Ausschnitt in 5
- 22.: Vorsprünge in 5
- 23.: --
- 24.: Fenster
- 25.: Klammer
- 26.: lingualer Schenkel
- 27.: labialer Schenkel
- 28.: okklusaler Abschnitt von 25
- 29.: Fortsatz von 27
- 30.: Zunge
- 31.: --
- 32.: Rille
- 33.: --
- 34.: Ränder von 24
- 35.: labial gelegener Rand von 24, labialer Anschlag
- 36.: --
- 37.: linguale Ränder von 24, lingualer Anschlag
- 38.: linguale Ränder von 22
- 39.: Markierung auf 40
- 40.: aktives Bracket
- 41.: passives Bracket

## Patentansprüche

1. Baureihe von selbstligierenden Brackets für die Orthodontie, welche Brackets (40, 41) mit
einer Basis (1),
einem auf der Basis (1) angeordneten Sockel (4),
einer von dem Sockel (4) ausgehenden okklusalen Wand (6) mit wenigstens einem okklusalen Ligaturenflügel (9),
einer von dem Sockel (4) ausgehenden gingivalen Wand (5) mit wenigstens einem gingivalen Ligaturenflügel (8),
einem Slot (7), welcher die okklusale Wand (6) und die gingivale Wand (5) voneinander trennt, für die Brackets (40, 41) der Baureihe die gleiche kleinste lichte Weite hat und sich durchgehend in Richtung von mesial nach distal erstreckt und eine Basisfläche (11) hat, auf welcher bei einer orthodontischen Behandlung ein Bogendraht (10) liegt,
sowie federnde Klammern (25) mit einem labialen Schenkel (27) und mit einem lingualen Schenkel (26) enthält, welche durch einen okklusal angeordneten Abschnitt (28) miteinander verbunden sind,
**dadurch gekennzeichnet, dass** die Brackets (40, 41) einen Durchgang (18) aufweisen, welcher sich in Richtung gingival-okklusal durch den Sockel (4) hindurch erstreckt und durch eine lingual gelegene Oberfläche und durch eine labial gelegene Oberfläche (19) begrenzt ist,
wobei der linguale Schenkel (26) in den Durchgang (18) einführbar ist und darin nur in Richtung gingival-okklusal zwischen einer Schließstellung,
in welcher sich der labiale Schenkel (27) bis in einen Ausschnitt (24) in der gingivalen Wand (5) erstreckt, welcher mindestens in lingualer Richtung einen Anschlag (37) für den labialen Schenkel (27) hat,
und einer Offenstellung der Klammer (25) verschiebbar ist, in welcher sich die Spitze des labialen Schenkels (27) über der okklusalen Wand (6) befindet,
wobei die Baureihe Brackets (40, 41) enthält, die sich nur in der Tiefe des Slots (7) und somit im Abstand ihres lingualen Anschlags (37) von der Basisfläche (11) des Slots (7) unterscheiden.

2. Baureihe von selbstligierenden Brackets für die Orthodontie, welche Brackets (40, 41) mit
einer Basis (1),
einem auf der Basis (1) angeordneten Sockel (4),
einer von dem Sockel (4) ausgehenden okklusalen Wand (6) mit wenigstens einem okklusalem Ligaturenflügel (9),
einer von dem Sockel (4) ausgehenden gingivalen Wand (5) mit wenigstens einem gingivalen Ligaturenflügel (8),
einem Slot (7), welcher die okklusale Wand (6) und die gingivale Wand (5) voneinander trennt, für die Brackets (40, 41) der Baureihe die gleiche kleinste lichte Weite hat und sich durchgehend in Richtung von mesial nach distal erstreckt und eine Basisfläche (11) hat, auf welcher bei einer orthodontischen Behandlung ein Bogendraht (10) liegt,
sowie federnde Klammern (25) mit einem labialen Schenkel (27) und mit einem lingualen Schenkel (26) enthält, welche durch einen gingival angeordneten Abschnitt (28) miteinander verbunden sind,
**dadurch gekennzeichnet, dass** die Brackets (40, 41) einen Durchgang (18) aufweisen, welcher sich in Richtung gingival-okklusal durch den Sockel (4) hindurch erstreckt und durch eine lingual gelegene Oberfläche (19) und durch eine labial gelegene Oberfläche begrenzt ist,
wobei der linguale Schenkel (26) in den Durchgang (18) einführbar ist und darin nur in Richtung gingival-okklusal zwischen einer Schließstellung,
in welcher sich der labiale Schenkel (27) bis in einen Ausschnitt (24) in der okklusalen Wand (6) erstreckt, welcher mindestens in lingualer Richtung einen Anschlag (37) für den labialen Schenkel (27) hat,
und einer Offenstellung der Klammer (25) verschiebbar ist, in welcher sich die Spitze des labialen Schenkels (27) über der gingivalen Wand (5) befindet,
wobei die Baureihe Brackets (40, 41) enthält, die sich nur in der Tiefe des Slots (7) und somit im Abstand ihres lingualen Anschlags (37) von der Basisfläche (11) des Slots (7) unterscheiden.

3. Baureihe nach Anspruch 1 oder 2, **dadurch gekennzeichnet, dass** die Brackets (40, 41) übereinstimmende federnde Klammern (25) haben.

4. Baureihe nach einem der vorstehenden Ansprüche, **dadurch gekennzeichnet, dass** die kleinste lichte Weite des Slots (7) in einer ersten Variante 0,56 mm (0,022 inch) und in einer zweiten Variante 0,46 mm (0,018 inch) beträgt.

5. Baureihe nach einem der vorstehenden Ansprüche, **dadurch gekennzeichnet, dass** für ein erstes Bracket (41) der Abstand des Anschlags (37) für den labialen Schenkel (27) der Klammer (25) von der Basisfläche (11) des Slots (7) so groß gewählt ist, dass ein orthodontischer Bogendraht (10) mit dem größten in der orthodontischen Praxis vorkommenden Querschnitt, nämlich maximal 0,56 mm x 0,64 mm (0,022 inch x 0,025 inch), von der sich in ihrer Schließstellung befindlichen Klammer (25) nicht mit Druck beaufschlagt wird, wenn der Bogendraht (10) auf der Basisfläche (11) des Slots (7) liegt,
und dass für ein zweites Bracket (40) der Abstand des Anschlags (37) für den labialen Schenkel (27) der Klammer (25) von der Basisfläche (11) des Slots (7) kleiner gewählt ist.

6. Baureihe nach einem der vorstehenden Ansprüche, **dadurch gekennzeichnet, dass** sie orthodontische Bogendrähte (10) enthält.

7. Baureihe nach einem der vorstehenden Ansprüche, **dadurch gekennzeichnet, dass** der Abstand des Anschlags (37) für den labialen Schenkel (27) der Klammer (25) von der Basisfläche (11) des Slots (7) für ein erstes Bracket (41) 0,64 mm (0,025 inch) und für ein zweites Bracket (40) 0,3 mm bis 0,5 mm, insbesondere 0,38 mm bis 0,42 mm beträgt.

8. Baureihe nach einem der vorstehenden Ansprüche, **dadurch gekennzeichnet, dass** die Brackets (40, 41) dem lingualen Anschlag (37) für den labialen Schenkel (27) der Klammer (25) gegenüberliegend auch einen in labialer Richtung wirksamen Anschlag (35) für den labialen Schenkel (27) der Klammer (25) haben.

9. Baureihe nach einem der vorstehenden Ansprüche, **dadurch gekennzeichnet, dass** der Ausschnitt (24) in der gingivalen Wand (5) bzw. in der okklusalen Wand (6) des Brackets (40, 41) ein Fenster (21) oder eine Nut ist oder umfaßt, welche parallel zur Basisfläche (11) des Slots (7) verlaufende Ränder haben.

10. Baureihe nach einem der vorstehenden Ansprüche, **dadurch gekennzeichnet, dass** sie Paare von Brackets (40, 41) mit untereinander gleichen Klammern (25) enthält, wobei sich die beiden Brackets (40, 41) eines Paares nur in der Tiefe des Slots (7) unterscheiden.

## Claims

1. Set of self-ligating brackets for orthodontics, which includes brackets (40, 41) having
a base (1),
a block (4) arranged on the base (1),
an occlusal wall (6) extending from the block (4) and having at least one occlusal ligature wing (9),
a gingival wall (5) extending from the block (4) and having at least one gingival ligature wing (8),
a slot (7), which separates the occlusal wall (6) and the gingival wall (5) from one another, has the same minimum clear width for the brackets (40, 41) of the set and extends continuously in the direction from mesial to distal and has a base area (11) on which an archwire (10) lies during orthodontic treatment,
as well as resilient clips (25) with a labial leg (27) and with a lingual leg (26), which are interconnected by an occlusally arranged portion (28),
**characterised in that** the brackets (40, 41) have a passage (18), which extends in the gingival-occlusal direction through the block (4) and is delimited by a lingually located surface and by a labially located surface (19),
wherein the lingual leg (26) can be inserted into the passage (18) and can be displaced therein only in the gingival-occlusal direction between a closed position, in which the labial leg (27) extends into a recess (24) in the gingival wall (5), said recess providing at least in lingual direction a stop (37) for the labial leg (27)
and an open position of the clip (25), in which the tip of the labial leg (27) is situated above the occlusal wall (6),
the set comprising brackets (40, 41) which differ only in the depth of the slot (7) and thus in terms of the distance of their lingual stop (37) from the base area (11) of the slot (7).

2. Set of self-ligating brackets for orthodontics, which includes brackets (40, 41) having
a base (1),
a block (4) arranged on the base (1),
an occlusal wall (6) extending from the block (4) and having at least one occlusal ligature wing (9),
a gingival wall (5) extending from the block (4) and having at least one gingival ligature wing (8),
a slot (7), which separates the occlusal wall (6) and the gingival wall (5) from one another, has the same minimum clear width for the brackets (40, 41) of the set and extends continuously in the direction from mesial to distal and has a base area (11) on which an archwire (10) lies during orthodontic treatment,
as well as resilient clips (25) with a labial leg (27) and with a lingual leg (26), which are interconnected by a gingivally arranged portion (28),
**characterised in that** the brackets (40, 41) have a passage (18), which extends in the gingival-occlusal direction through the block (4) and is delimited by a lingually located surface (19) and by a labially located surface,
wherein the lingual leg (26) can be inserted into the passage (18) and can be displaced therein only in the gingival-occlusal direction between a closed position, in which the labial leg (27) extends into a recess (24) in the occlusal wall (6), said recess providing at least in lingual direction a stop (37) for the labial leg (27)
and an open position of the clip (25), in which the tip of the labial leg (27) is situated above the gingival wall (5),
the set comprising brackets (40, 41) which differ only in the depth of the slot (7) and thus in terms of the distance of their lingual stop (37) from the base area (11) of the slot (7).

3. The set according to claim 1 or 2, **characterised in that** the brackets (40, 41) have identical clips (25).

4. The set according to any of the preceding claims, **characterised in that** the minimum clear width of the slot (7) is equal to 0.56 mm (0.022 inch) in a first variant and 0.46 mm (0.018 inch) in a second variant.

5. The set according to any of the preceding claims, **characterised in that** for a first bracket (41) the size of the distance of the stop (37) for the labial leg (27) of the clip (25) from the base area (11) of the slot (7) is selected so large that an orthodontic archwire (10) having the largest cross section occurring in orthodontic practice, namely at most 0.56 mm x 0.64 mm (0.022 inch x 0.025 inch), is not subjected to pressure by the clip (25) in its closed position when the archwire (10) lies on the base area (11) of the slot (7),
and that for a second bracket (40) the size of the distance of the stop (37) for the labial leg (27) of the clip (25) from the base area (11) of the slot (7) is selected to be smaller.

6. The set according to any of the preceding claims, **characterised in that** it comprises orthodontic archwires (10).

7. The set according to any of the preceding claims, **characterised in and** that the distance of the stop (37) for the labial leg (27) of the clip (25) from the base area (11) of the slot (7) is equal to 0.64 mm (0.025 inch) for a first bracket (41) and 0.3 mm to 0.5 mm, in particular 0.38 mm to 0.42 mm, for a second bracket (40).

8. The set according to any of the preceding claims, **characterised in that** the brackets (40, 41) have a stop (35) for the labial leg (27) of the clip (25), said stop being effective in labial direction opposite to the lingual stop (37) for the labial leg (27) of the clip (25).

9. The set according to any of the preceding claims, **characterised in that** the recess (24) in the gingival wall (5) or in the occlusal wall (6) of the bracket (40, 41) is or includes a window (21) or a groove, which have rims running parallel to the base area (11) of the slot (7).

10. The set according to any of the preceding claims, **characterised in that** it comprises pairs of brackets (40, 41) with identical clips (25), wherein both brackets (40, 41) of a pair only differ in the depth of the slot (7).

## Revendications

1. Gamme de fabrication de boîtiers auto-ligaturants pour l'orthodontie, lesquels boîtiers (40, 41) présentent :
une base (1),
un socle (4) disposé sur la base (1),
une paroi occlusale (6) partant du socle (4) et comportant au moins une ailette de ligature occlusale (9),
une paroi gingivale (5) partant du socle (4) et comportant au moins une ailette de ligature gingivale (8),
une fente (7) séparant la paroi occlusale (6) de la paroi gingivale (5),
présentant pour les boîtiers (40, 41) de la gamme la même largeur intérieure minimale et s'étendant sans interruption dans le sens mésial-distal, et possédant une surface de base (11) sur laquelle repose un fil d'arc (10) pendant le traitement orthodontique,
ainsi que des attaches élastiques (25) comportant une branche labiale (27) et une branche linguale (26) reliées entre elles par un segment occlusal (28), **caractérisée en ce que** les boîtiers (40, 41) comportent un passage (18) qui traverse le socle (4) dans le sens gingival-occlusal et est délimité par une surface linguale et par une surface labiale (19),
la branche linguale (26) pouvant être introduite dans le passage (18) dans lequel elle n'est mobile que dans le sens gingival-occlusal, entre une position fermée
dans laquelle la branche labiale (27) s'étend jusque dans une découpe (24) pratiquée dans la paroi gingivale (5) et comportant au moins dans le sens lingual une butée (37) destinée à la branche labiale (27),
et étant déplaçable dans une position ouverte de l'attache (25), dans laquelle la pointe de la branche labiale (27) se trouve au-dessus de la paroi occlusale (6),
la gamme comportant des boîtiers (40, 41) qui ne se différencient que par la profondeur de la fente (7) et donc par la distance de leur butée linguale (37) par rapport à la surface de base (11) de la fente (7).

2. Gamme de fabrication de boîtiers auto-ligaturants pour l'orthodontie, lesquels boîtiers (40, 41) comportent :
une base (1),
un socle (4) disposé sur la base (1),
une paroi occlusale (6) partant du socle (4) et comportant au moins une ailette de ligature occlusale (9),
une paroi gingivale (5) partant du socle (4) et comportant au moins une ailette de ligature gingivale (8),
une fente (7) séparant la paroi occlusale (6) de la paroi gingivale (5),
présentant pour les boîtiers (40, 41) de la gamme la même largeur intérieure minimale et s'étendant sans interruption dans le sens mésial-distal, et possédant une surface de base (11) sur laquelle repose un fil d'arc (10) pendant le traitement orthodontique,
ainsi que des attaches élastiques (25) comportant une branche labiale (27) et une branche linguale (26) reliées entre elles par un segment gingival (28),
**caractérisée en ce que** les boîtiers (40, 41) comportent un passage (18) qui traverse le socle (4) dans le sens gingival-occlusal et est délimité par une surface linguale (19) et une surface labiale,
la branche linguale (26) pouvant être introduite dans le passage (18) dans lequel elle n'est mobile que dans le sens gingival-occlusal, entre une position fermée
dans laquelle la branche labiale (27) s'étend jusque dans une découpe (24) pratiquée dans la paroi occlusale (6) et comportant au moins dans le sens lingual une butée (37) destinée à la branche labiale (27),
et étant déplaçable dans une position ouverte de l'attache (25), dans laquelle la pointe de la branche labiale (27) se trouve au-dessus de la paroi gingivale (5),
la gamme comportant des boîtiers (40, 41) qui ne se différencient que par la profondeur de la fente (7) et donc par la distance de leur butée linguale (37) par rapport à la surface de base (11) de la fente (7).

3. Gamme de fabrication selon la revendication 1 ou 2, **caractérisée en ce que** les boîtiers (40, 41) ont des attaches élastiques (25) identiques.

4. Gamme de fabrication selon l'une des revendications précédentes, **caractérisée en ce que** la largeur intérieure minimale de la fente (7) est de 0,56 mm (0,022 inch) selon une première variante et de 0,46 mm (0,018 inch) selon une deuxième variante.

5. Gamme de fabrication selon l'une des revendications précédentes, **caractérisée en ce que** pour un premier boîtier (41), la distance de la butée (37) destinée à la branche labiale (27) de l'attache (25) par rapport à la surface de base (11) de la fente (7) est telle qu'un fil d'arc orthodontique (10) ayant la plus grande section transversale rencontrée dans la pratique orthodontique, à savoir au maximum 0,56 mm x 0,64 mm (0,022 inch x 0,025 inch), n'est pas sollicité en pression par l'attache (25) dans sa position fermée, lorsque le fil d'arc (10) repose sur la surface de base (11) de la fente (7),
et que pour un deuxième boîtier (40), la distance de la butée (37) destinée à la branche labiale (27) de l'attache (25) par rapport à la surface de base (11) de la fente (5) est choisie plus petite.

6. Gamme de fabrication selon l'une des revendications précédentes, **caractérisée en ce qu**'elle comporte des fils d'arc orthodontiques (10).

7. Gamme de fabrication selon l'une des revendications précédentes, **caractérisée en ce que** la distance de la butée (37) destinée à la branche labiale (27) de l'attache (25) par rapport à la surface de base (11) de la fente (7) est de 0,64 mm (0,025 inch) pour un premier boîtier (41) et de 0,3 mm à 0,5 mm, en particulier 0,38 mm à 0,42 mm, pour un deuxième boîtier (40).

8. Gamme de fabrication selon l'une des revendications précédentes, **caractérisée en ce que** les boîtiers (40, 41) ont à l'opposé de la butée (37) destinée à la branche labiale (27) de l'attache (25) également une butée (35) destinée à la branche labiale (27) de l'attache (25), agissant dans le sens labial.

9. Gamme de fabrication selon l'une des revendications précédentes, **caractérisée en ce que** la découpe (24) pratiquée dans la paroi gingivale (5), respectivement dans la paroi occlusale (6) du boîtier (40, 41) est ou comprend une fenêtre (21) ou une rainure ayant des bords parallèles à la surface de base (11) de la fente (7).

10. Gamme de fabrication selon l'une des revendications précédentes, **caractérisée en ce qu**'elle comporte des paires de boîtiers (40, 41) avec des attaches (25) identiques, les deux boîtiers (40, 41) d'une paire ne se différenciant que par la profondeur de la fente (7).
